# EUROPEAN PATENT APPLICATION

(11) **EP 3 995 689 A1**
(43) Date of publication of application: **11.05.2022**
(21) Application number: 20206452.3
(22) Date of filing: 09.11.2020
(51) Int. Cl.: F03D 7/02, F03D 80/40

(54) **METHOD FOR COMPUTER-IMPLEMENTED OPERATION OF A WIND TURBINE**

(71) Applicant: Siemens Gamesa Renewable Energy A/S, 7330 Brande (DK)
(72) Inventor: The designation of the inventor has not yet been filed
(74) Representative: Aspacher, Karl-Georg

(57) **Abstract**

The invention refers to a method for computer-implemented operation of a wind turbine (10). The wind turbine (10) comprises an upper section (11) on top of a tower, the upper section (11) being pivotable around a vertical yaw axis (VI) and having a nacelle (12) and a rotor (13) with rotor blades, the rotor (13) being attached to the nacelle (12) and the rotor blades being rotatable by wind in a rotor plane (14) around a horizontal rotor axis (R1). At each time point of one or more time points during the operation of the wind farm the following steps are performed: i) reading an icing indication information (IC) from a data storage that indicates the absence or presence of ice on the rotor blades; and ii)
initiating a control operation of the wind turbine if, as a first predetermined condition, the icing indication information (IC) indicates the presence of ice on the rotor blades and, as a second predetermined condition, a current rotor plane angle (Φ_{RP}) of the wind turbine is outside a predefined first sector (AS) of a circular area (CA), where the predefined first sector (AS) lies in a plane perpendicular to the vertical yaw axis (VI) with the vertical yaw axis (VI) running through the center of the circular area (CA), and the current rotor plane angle (Φ_{RP}) is the angle between a reference direction (15) and the direction of the rotor plane (14) viewed in a vertical direction from above.

## Description

The invention relates to a method and an apparatus for computer-implemented operation of a wind turbine.

In specific regions like northern America, northern Europe, and so on, rotor blades of a rotor of a wind turbine can show icing. If ice falls off the rotor blades during rotation, ice can be thrown over a wide distance. The falling ice might hit a person or any other object thereby causing a harm or damage. Hence, if the rotor blades are iced, operation of the wind turbine needs to be stopped. Once the wind turbine and its rotor are stopped, the ice mainly falls vertically. The wind turbine can be restarted once it is confirmed that ice is melted. However, stopping the wind turbine causes losses in energy production due to stand still.

It is an object of the invention to provide an easy method in order to enable an improved operation of a wind turbine even in case of icing.

This object is solved by the independent claims. Preferred embodiments of the invention are defined in the dependent claims.

The invention provides a method for computer-implemented operation of a wind turbine. The wind turbine may be part of a wind farm or may be a single wind turbine. The wind turbine comprises an upper section on top of a tower, the upper section being pivotable around a vertical yaw axis and having a nacelle and a rotor with rotor blades. The rotor is attached to the nacelle and the rotor blades are rotatable by wind in a rotor plane around a horizontal rotor axis.

According to the method of the invention, the following steps i) and ii) are performed at each time point of one or more time points during the operation of the wind farm.

In step i), an icing indication information is read from a data storage that indicates the absence or presence of ice on the rotor blades. The term "reading an icing indication information" refers to reading a digital information which is stored in the data storage, such as a database or a memory of a control unit of the wind turbine. The icing indication information may be a current determined information. The icing indication information may be determined by means of sensors. The icing indication information may be provided by a prediction method for icing based, for example, on weather model data.

In step ii), a control information of the wind turbine is initiated if the following two predetermined conditions are met. As a first predetermined condition, the icing indication information has to indicate the presence of ice on the rotor blades. The indication of the presence of icing may be made by a flag or any other pre-defined information piece. As a second predetermined condition, a current rotor plane angle of the wind turbine has to be outside a predefined first sector of a circular area. The predefined first sector may be called a free-to-operate-sector in which an operation of the wind turbine is allowed even in case of presence of ice at the rotor blades. Areas outside the first sector are so-called non-operate areas of the wind turbine. The predefined first sector lies in a plane perpendicular to the vertical yaw axis with the vertical yaw axis running through the center of the circular area. The current rotor plane angle is the angle between a reference direction and the direction of the rotor plane viewed in a vertical direction from above. The reference direction may be any predefined direction with reference to the wind turbine. However, it is preferred if the reference direction corresponds to north direction, in particular the true north.

The method of the invention provides an easy and straight forward method for operation of a wind turbine even in the case of iced rotor blades. In case of icing and the determination that the current rotor plane angle is outside a predefined first sector of a circular area, the initiated control operation of the wind turbine is such that harm or damage caused by ice falling off the rotor blades and hitting a person or other object can be avoided. If, on the other hand, the current rotor plane angle is within the predefined first sector of the circular area, the turbine can continue operation. Hence, even if rotor blades are iced, the wind turbine has a reduced downtime resulting in increased performance and improved levelized cost of energy (LCOE).

In a preferred embodiment of the invention, in the predefined first sector, no predefined objects are located. Predefined objects may be resident houses, streets, pedestrian areas, and so on, which are prone to damages because of their geographic location with respect to the wind turbine in case of ice falling off the wind turbine.

In a further preferred embodiment, the predefined first sector consists of at least one circular sector, each of which is defined by a first circle radius arranged in a first angle with respect to the reference direction, a second circle radius arranged in a second angle with respect to the reference direction and a first arc. The first angle of the first circle radius and the second angle of the second circle radius are chosen such that they tangent, starting from the center of the circular area, a predefined object with the predefined object lying outside the circular sector. In case that there is a plurality of predefined objects to be protected from ice falling off the rotor blades during its operation, a plurality of such sectors may be defined.

Finding the borders of the first sector is part of an environment or surrounding study of the wind turbine. The surrounding of the wind turbine has to be analyzed to detect the predefined objects which can be hit by the ice thrown by the turbine. This process may be performed manually. Alternatively, aerial images acquired by drones or satellites can be analyzed, for example by a convolutional neural network which is trained to detect predefined objects with respect to the location of the wind turbine so that their locations of the objects can be derived. In the following, directions relative to the wind turbine for the predefined objects are derived. These directions correspond to the first and second angles of the first and second circle radii. This input information needs to be collected once, in particular, prior to executing the method described herein. The input information may be stored in the data storage or any other database.

In a further preferred embodiment, the first angle of the first circle radius and the second angle of the second circle radius are subjected to a predefined safety margin to increase distance to the predefined object. This embodiment allows for considering measurement errors of the current rotor plane angle with respect to the reference direction. Even in case of a small misalignment, it can be avoided that ice falling off the rotor blades hits one of the predetermined objects.

According to a further preferred embodiment, the first angle of the first circle radius and the second angle of the second circle radius are stored in the data storage. The data storage may be the same data storage in which the icing indication information is stored. However, the data storage may be any other memory or database.

If the first predetermined condition is met, the first angle of the first circle radius and the second angle of the second circle radius are read from the data storage and it is verified whether the current rotor plane angle is inside or outside the predefined first sector defined by the first and the second angle to determine whether or not the second predetermined condition is met.

In a further preferred embodiment, the predefined first sector consists of an opposite circular sector corresponding to the circular sector within the circular area. The corresponding circular sector is defined by a third circle radius directing in the first angle plus 180°, a fourth circle radius directing in the second angle plus 180° and a second arc. The opposite sectors are automatically free-to-operate sectors as well. The same holds for second sectors adjacent to the pre-defined first sector which are non-operate areas or "forbidden-to-operate" sectors.

In a further preferred embodiment, the control operation of a wind turbine comprises stopping the wind turbine or reducing the rotational speed of the rotor. Reducing the rotational speed of the rotor from a target rotational speed to a reduced rotational speed has the effect that ice on the rotor blades will not be thrown as far as compared to the target rotational speed. The reduced rotational speed may be chosen such that the maximum radius of thrown ice is smaller than the distance between the wind turbine and the predetermined object in the direction of the rotor plane. The mentioned control operation is only initiated if the first predetermined condition and the second predetermined condition are met.

In an alternative embodiment, the control operation of the wind turbine comprises adjusting the yaw angle to a misalignment angle such that a resulting rotor plane angle is within the predefined first sector. Again, it holds that the mentioned control operation is only initiated if the first and the second predetermined conditions are met.

Besides the method above, the invention refers to an apparatus for computer-implemented operation of a wind turbine, where the apparatus is configured to perform the method according to the invention or one or more preferred embodiments of the method according to the invention.

Moreover, the invention refers to a wind turbine, wherein the wind turbine comprises an apparatus according to the invention or one or more preferred embodiments thereof.

Moreover, the invention refers to a computer program product with a program code, which is stored on a non-transitory machine-readable carrier, for carrying out the method according to the invention or one or more preferred embodiments thereof when the program code is executed on a computer.

An embodiment of the invention will now be described in detail with reference to the accompanying drawings.
- Fig. 1: shows a schematic illustration of a wind-turbine in the vicinity of different predefined objects and which is controlled according to a conventional operation method;
- Fig. 2: shows a schematic illustration of the wind turbine, a wind direction and the resulting rotor plane area;
- Fig. 3: shows a schematic illustration of the wind turbine according to the situation in Fig. 1 with an improved operation method according to the invention;
- Fig. 4: shows a schematic illustration of the wind turbine and its controlling according to the method of the invention without and with a small yaw misalignment in case of icing detection; and
- Fig. 5: shows a schematic illustration of an apparatus according to the invention.

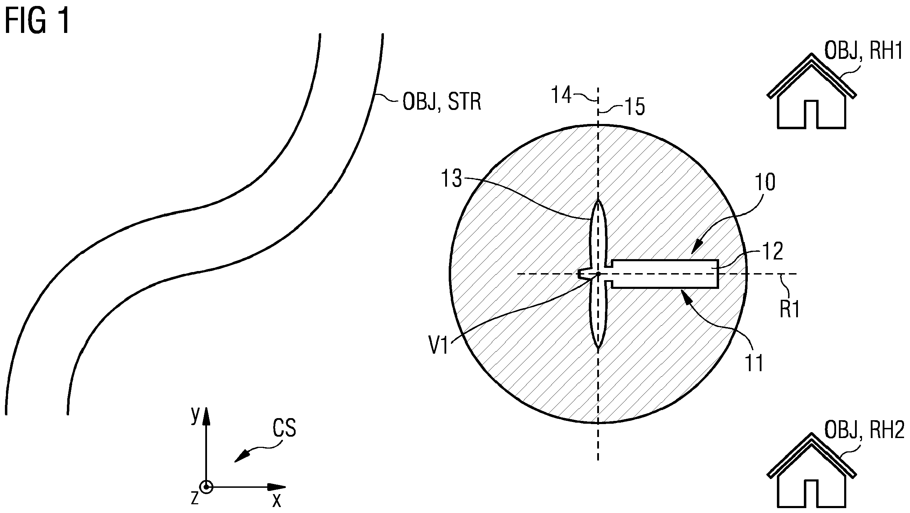

Fig. 1 is a schematic illustration of a single wind turbine 10 which is surrounded by a number of different objects OBJ in the vicinity of the wind turbine 10.

Fig. 1 shows the wind turbine 10 in a plan view from above. A 3D coordinate system CS for indicating the spatial arrangement of the wind turbine 10 is part of Fig. 1. The vertical direction is indicated by the z-axis of the coordinate system CS whereas the directions parallel to the horizontal direction are indicated by the x-axis and y-axis of the coordinate system CS. The wind direction WND is, by way of example only, along the x-axis of the coordinate system CS.

The wind turbine 10 comprises an upper section 11 being located on top of a tower (not shown) which extends in the vertical z-direction. The upper section 11 comprises a nacelle 12 accommodating an electric generator for generating electricity. Furthermore, the upper section 11 comprises a rotor 13 having three rotor blades with an angle of 120° therebetween where Fig. 1 only shows two of those blades. The rotor 13 is rotated around the horizontal rotor axis R1 by wind resulting in the generation of electricity by the generator within the nacelle 12. The upper section 11 of the wind turbine 10 can be pivoted around the vertical yaw axis V1.

The yaw angle of the upper section 11 around the yaw axis V1 is adjusted such that the rotor axis R1 corresponds to the wind direction WND measured by respective wind sectors installed at the wind turbine 10.

As shown in the plan view of Fig. 1 in the vicinity of the wind turbine 10 a street STR and two resident houses RH1, RH2 are located. The street STR and the resident houses RH1, RH2 are predefined objects OBJ to which harm or damage can be caused if ice accreted on the rotor blades 13 falls off the blade and hits the object or a person staying at one of the objects OBJ. Such a harm or damage might occur if the wind direction WND changes such that a rotor plane 14 in which the rotor blades 13 are rotating is directed towards one of the objects OBJ.

To avoid such a situation, the wind turbine 10 is equipped with a not shown ice detecting sensor or any other means for detecting icing on the rotor blades of the rotor 13 and, if ice is detected, the turbine is stopped for all directions (indicated by the dashed circle around the vertical yaw axis V1) of the rotor plane with regard to a reference direction 15. The reference direction 15 may be chosen arbitrarily. However, in a preferred embodiment the reference direction 15 corresponds to north direction, i.e. true north, as this direction is known to the controller of the wind turbine 10. In the present example of Fig. 1, the rotor plane 14 lies, in a view from above, in the reference direction 15 resulting in a current rotor plane angle Φ_{RP} of 0°, i.e. Φ_{RP} = 0°.

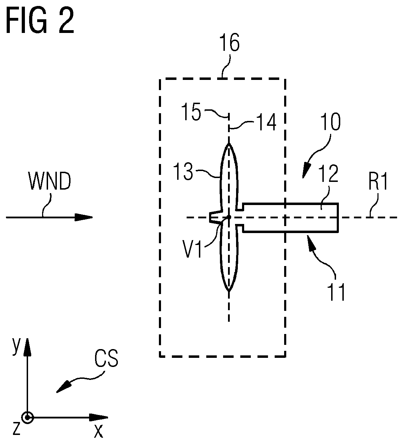

Fig. 2 shows the wind direction WND together with the wind turbine 10 and the resulting rotor plane 14 in a view from above. As the wind direction WND is parallel to the x-axis, and as the reference direction 15 corresponds to the y-axis of the coordinate system CS, the resulting current rotor plane angle Φ_{RP} corresponds to 0°. A rotor plane area 16 lying in a plane parallel to the x- and y-axis of the coordinate system and oriented with respect to the rotor plane 14 represents the area which could be hit by ice falling off the turbine. As apparent to the person skilled in the art, the rotor plane area 16 rotates around the vertical rotor axis V1 if a rotation of the wind turbine 10 occurs due to a change of the wind direction WND to adapt the yaw angle to maximize energy production.

The present operation strategy of the wind turbine 10 to stop the turbine if icing of the rotor 13 is detected results in a decreased performance and reduced LCOE. The method as described below avoids these drawbacks and increases performance, results in a reduced downtime of the wind turbine 10 and an improved LCOE.

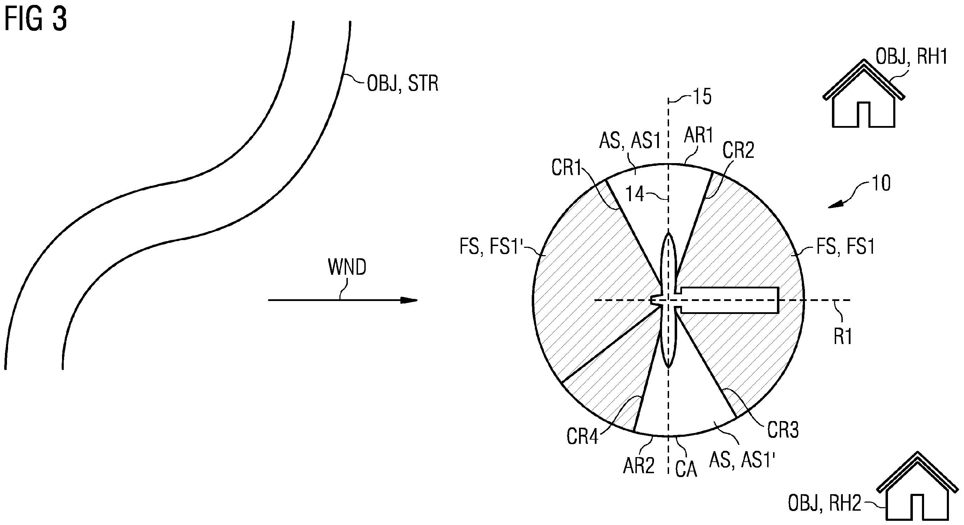

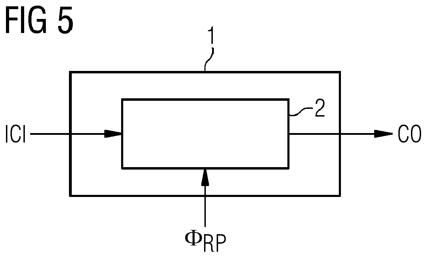

Fig. 3 shows the schematic view of Fig. 1 with improved controlling according to the invention. To do so, an icing indication information ICE (see Fig. 5) is read from a data storage, such as a database or a memory, which can be read by a not shown controller of the wind turbine 10. The icing indication information ICE indicates the absence or presence of ice on the rotor blades. Absence or presence of ice on the rotor blades may be determined by specific ice detectors or sensors (not shown). They may be based on a change of the eigenfrequencies due to changing masses of the rotor 13. Ice detection may further be based on a prediction model using weather model data and so on. For the present invention, any known means or method to detect icing might be used.

In a further step, the control operation of the wind turbine is only initiated if two predetermined conditions are met. As a first predetermined condition, the icing indication information ICE which has been read from the data storage has to indicate the presence of ice on the rotor blades. As a second predetermined condition, the current rotor plane angle Φ_{RP} of the wind turbine 10 has to be outside a predetermined first sector AS of a circular area CA around the wind turbine 10. The predefined first sector AS lies in a plane perpendicular to the vertical yaw axis V1 with the vertical yaw axis V1 running through the center through the circular area CA. As noted above, the current rotor plane angle Φ_{RP} is the angle between a reference direction 15 and the direction of the rotor plane 14 viewed in a vertical direction from above. As in Fig. 1, the rotor plane 14 lies in a view from above in the reference direction 15 resulting in a current rotor plane angle Φ_{RP} of 0°, i.e. Φ_{RP} = 0°.

As can be seen from Fig. 3, the predefined first sector AS consists of one circular sector AS1 and one opposite circular sector AS1'. The circular sector AS1 is defined by a first circle radius CR1 arranged in a first angle with respect to the reference direction 15, a second circle radius CR2 arranged in a second angle with respect to the reference direction 15 and a first arc AR1. The corresponding opposite circular sector AS1' is defined by a third circle radius CR3 directing in the first angle plus 180°, a fourth circle radius CR4 directing in the second angle plus 180° and a second arc AR2. The circular sector AS1 and one opposite circular sector AS1' are drawn without hatchings.

The first angle of the first circle radius CR1 and the second angle of the second circle radius CR2 are chosen such that they tangent, starting from the center of the circular area CA (i.e. the foot of the wind turbine 10), a predefined object OBJ with the predefined object OBJ lying outside the circular sector AS1. As can be easily seen from Fig. 3, the predefined first sector AS constitutes of the circular sector AS1 and its opposite circular sector AS1' which are free-to-operate-sectors and in which operation of the wind turbine 10 is allowed even in the case of presence of ice. If ice is falling off the rotor blades when the wind turbine 10 is operated in the predefined first sector AS, none of the predefined objects OBJ can be hit by ice falling off the wind turbine 10.

As apparent to the persons skilled in the art, the other areas of the circular area CA being not part of the predefined first sector AS constitute a second sector FS representing a non-operate sector as ice falling off the rotor blades could hit one of the predefined objects OBJ.

The second sector FS consists of a circular sector FS1 and an opposite circular sector FS1'. The circular sector FS1 is defined by the second circle radius CR2 and the third circle radius CR3 and an arc (not labeled). The opposite circular sector SF1' is defined by the fourth circle radius RD4 and the first circle radius CR1 and an arc (not labeled). As can be easily seen, if the wind turbine is steered such that the rotor plane 14 is within the second sector FS, ice falling off the rotor blades could hit one of the objects OBJ, either the street STR or one of the resident houses RH1, RH2.

To avoid this dangerous situation, if the second predetermined condition is met, i.e. the current rotor plane angle Φ_{RP} of the wind turbine is outside the first sector AS of the circular area CA (or in other words: within the second sector FS circular area CA), the wind turbine will be controlled such that it is stopped. Alternatively, the control operation of the wind turbine can comprise adjusting the yaw angle to a misalignment angle such that a resulting rotor plane angle Φ_{RP} is within the predefined first sector AS. Although the aerodynamic performance is sub-optimal in this case, the overall performance of the wind turbine is significantly increased since this second-best solution is still better than stopping the turbine completely. The latter control operation is preferable if the rotor plane angle is close to the second circle radius CR2.

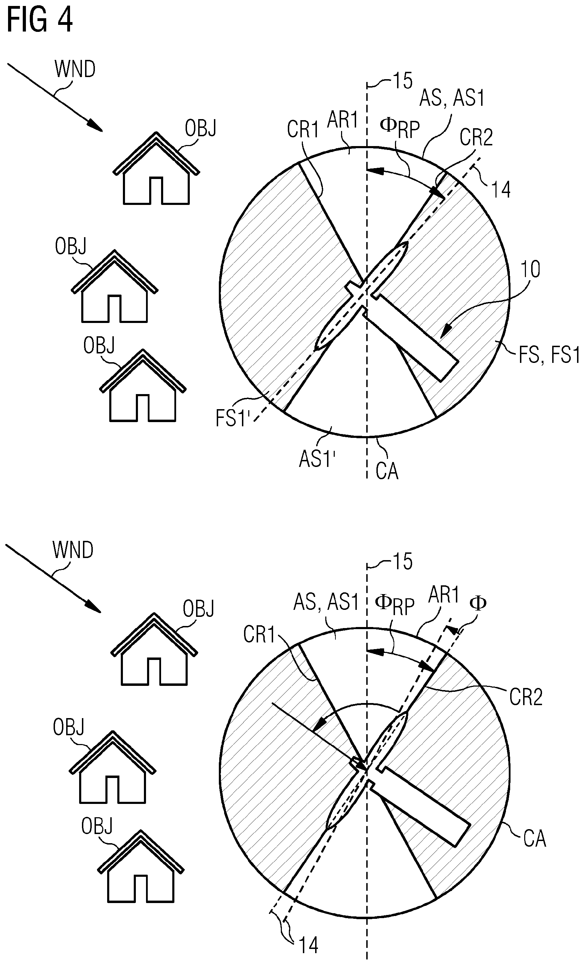

These alternatives of possible control operations can be seen in Fig. 4.

In the upper part of Fig. 4, the wind turbine 10 shows the situation in which the rotor plane 14 aligns to the wind direction WND and thus ends up with the rotor plane 14 in a restricted second sector FS of operation (non-operate sector). According to the first alternative, wind turbine would have to be stopped.

The lower part of Fig. 4 shows a situation with a small modification to the situation in the upper part of Fig. 4. The rotor angle of the wind turbine 10 is aligned so that it operates at the edges and within the allowed first sector AS. As a result, the rotor is not perfectly aligned with the wind direction WND anymore. This leads to an operation with a small yaw misalignment angle Φ. Nevertheless, this operation is preferable to the former situation of a stopped wind turbine because a small loss in performance is better than a complete stop as it would be necessary in the situation shown in the upper part of Fig. 4.

Fig. 5 shows a controller 1 of the wind turbine 10. The controller 1 comprises a processor 2 implementing the method as described above. It reads the icing indication information ICE from a data storage (not shown). It furthermore receives the information about the current rotor plane angle Φ_{RP}. This angle can be read from a data storage or a sensor at run-time. After having checked the above described two predetermined conditions ((1) rotor blades are iced or not and (2) location of the current rotor plane angle is within or outside a predefined first sector AS) a control operation CO may be initiated, e.g. stopping the wind turbine or reducing the rotational speed of the rotor or adjusting the yaw angle Φ_{RP} to bring the rotor plane within the predefined sector AS.

The invention as described in the foregoing has several advantages. Particularly, an easy and straight forward method in order to operate a wind turbine even under icing conditions is provided. To do so, the icing condition is determined based on a sensor or model data. Furthermore, the orientation of the rotor plane with respect to an allowed first sector or forbitten second sector is checked. If necessary, the wind turbine is stopped or controlled to a safe condition. This results in reduced downtime of the wind turbine, an increased performance and an improved LCOE.

## Claims

1. A method for computer-implemented operation of a wind turbine (10), where the wind turbine (10) comprises an upper section (11) on top of a tower, the upper section (11) being pivotable around a vertical yaw axis (V1) and having a nacelle (12) and a rotor (13) with rotor blades, the rotor (13) being attached to the nacelle (12) and the rotor blades being rotatable by wind in a rotor plane (14) around a horizontal rotor axis (R1), wherein at each time point of one or more time points during the operation of the wind farm the following steps are performed:
i) reading an icing indication information (IC) from a data storage that indicates the absence or presence of ice on the rotor blades;
ii) initiating a control operation of the wind turbine if, as a first predetermined condition, the icing indication information (IC) indicates the presence of ice on the rotor blades and, as a second predetermined condition, a current rotor plane angle (Φ_{RP}) of the wind turbine is outside a predefined first sector (AS) of a circular area (CA), where the predefined first sector (AS) lies in a plane perpendicular to the vertical yaw axis (V1) with the vertical yaw axis (V1) running through the center of the circular area (CA), and the current rotor plane angle (Φ_{RP}) is the angle between a reference direction (15) and the direction of the rotor plane (14) viewed in a vertical direction from above.

2. The method according to claim 1, wherein in the predefined first sector (AS) no predefined objects (RH1, RH2, STR) are located.

3. The method according to claim 1 or 2, wherein the predefined first sector (AS) consists of at least one circular sector (AS1) each of which is defined by a first circle radius (CR1) arranged in a first angle with respect to the reference direction (15), a second circle radius (CR2) arranged in a second angle with respect to the reference direction (15) and a first arc (AR1).

4. The method according to claim 3, wherein the first angle of the first circle radius (CR1) and the second angle of the second circle radius (CR2) are chosen such that they tangent, starting from the center of the circular area (CA), a predefined object (RH1, RH2, STR) with the predefined object (RH1, RH2, STR) lying outside the circular sector (AS1).

5. The method according to claim 3 or 4, wherein the first angle of the first circle radius (CR1) and the second angle of the second circle radius (CR2) are subjected to a predefined safety margin to increase distance to the predefined object (RH1, RH2, STR).

6. The method according to one of claims 3 to 5, wherein the first angle of the first circle radius (CR1) and the second angle of the second circle radius (CR2) are stored in the data storage.

7. The method according to one of claims 3 to 6, wherein, if the first predetermined condition is met, the first angle of the first circle radius (CR1) and the second angle of the second circle radius (CR2) are read from the data storage and it is verified whether the current rotor plane angle (Φ_{RP}) is inside or outside the predefined first sector (AS) defined by the first and second angle to determine whether the second predetermined condition is met or not.

8. The method according to one of the preceding claims, wherein the predefined first sector (AS) consists of an opposite circular sector (AS1') corresponding to the circular sector (AS1) within the circular area (CA), wherein the corresponding opposite circular sector (AS1') is defined by a third circle radius (CR3) directing in the first angle plus 180°, a forth circle radius (CR4) directing in the second angle plus 180° and a second arc (AR2).

9. The method according to one of the preceding claims, wherein the control operation of the wind turbine (10) comprises stopping the wind turbine (10) or reducing the rotational speed of the rotor (13).

10. The method according to one of the preceding claims, wherein the control operation of the wind turbine (10) comprises adjusting the yaw angle to a misalignment angle such that the resulting rotor plane angle (Φ_{RP}) is within the predefined first sector (AS).

11. An apparatus for computer-implemented operation of a wind turbine (10), where the wind turbine (10) comprises an upper section (11) on top of a tower, the upper section (11) being pivotable around a vertical yaw axis (V1) and having a nacelle (12) and a rotor (13) with rotor blades, the rotor (13) being attached to the nacelle (12) and the rotor blades being rotatable by wind in a rotor plane (14) around a horizontal rotor axis (R1), wherein the apparatus (4) comprises a processor (PR) configured to perform at each time point of one or more time points during the operation of the wind farm the following steps:
i) reading an icing indication information (IC) from a data storage that indicates the absence or presence of ice on the rotor blades;
ii) initiating a control operation of the wind turbine if, as a first predetermined condition, the icing indication information (IC) indicates the presence of ice on the rotor blades and, as a second predetermined condition, a current rotor plane angle (Φ_{RP}) of the wind turbine is outside a predefined first sector (AS) of a circular area (CA), where the predefined first sector (AS) lies in a plane perpendicular to the vertical yaw axis (V1) with the vertical yaw axis (V1) running through the center of the circular area (CA), and the current rotor plane angle (Φ_{RP}) is the angle between a reference direction (15) and the direction of the rotor plane (14) viewed in a vertical direction from above.

12. The apparatus according to claim 11, wherein the apparatus (4) is configured to perform a method according to one of claims 2 to 10.

13. A wind turbine (10) comprising an upper section (11) on top of a tower, the upper section (11) being pivotable around a vertical yaw axis (V1) and having a nacelle (12) and a rotor (13) with rotor blades, the rotor (13) being attached to the nacelle (12) and the rotor blades being rotatable by wind around a horizontal rotor axis (R1), wherein the wind turbine (10) comprises an apparatus (4) according to claim 11 or 12.

14. A computer program product with program code, which is stored on a non-transitory machine-readable carrier, for carrying out a method according to one of claims 1 to 10 when the program code is executed on a computer.
